# EUROPÄISCHE PATENTANMELDUNG

(11) **EP 0 574 739 A1**
(43) Veröffentlichungstag der Anmeldung: **22.12.1993**
(21) Anmeldenummer: 93108397.6
(22) Anmeldetag: 25.05.1993
(51) Int. Cl.: B23C 5/22, B23C 5/10, B27G 13/14

(54) **Vorrichtung zum Zerspanen von Holz oder holzartigen Werkstoffen**

(30) Priorität: 16.06.1992 DE 4219650
(71) Anmelder: JAKOB SCHMID GmbH & CO., W-7082 Oberkochen (DE)
(72) Erfinder: Seibold, Hariolf, W-7082 Oberkochen (DE)
(74) Vertreter: Lorenz, Werner, Dipl.-Ing.

(57) **Zusammenfassung**

Bei einer Vorrichtung zum Zerspanen von Holz, holzartigen Werkstoffen oder von Leichtmetall, mit einem Grundkörper und in den Grundkörper eingesetzten Messern weist der Grundkörper (1) eine weitgehend geschlossene Rundform auf, in den eine Vielzahl von Umfangsbohrungen (2) eingebracht ist, in die die Messer (3) eingesetzt sind, welche durch Befestigungsglieder (5) in den Umfangsbohrungen (2) festgehalten sind.

## Beschreibung

Die Erfindung betrifft eine Vorrichtung zum Zerspanen von Holz, holzartigen Werkstoffen oder Leichtmetall, mit einem Grundkörper und in den Grundkörper eingesetzten Messern.

Es sind bereits verschiedene Vorrichtungen zum Zerspanen von Holz oder holzartigen Werkstoffen bekannt. Bekannte Vorrichtungen bestehen aus Massivhartmetall. Sie haben eine spiralförmig verlaufende gezahnte Oberfläche. Die gesamte Vorrichtung besteht dabei aus demselben hochwertigen Material. Daraus ergeben sich verschiedene Nachteile. So muß z.B. die gezahnte Oberfläche sehr widerstandsfähig gegen Abnützung sein, woraus relativ hohe Kosten für das Werkzeug resultieren, da die gesamte Vorrichtung aus diesem widerstandsfähigen Material gefertigt ist. Dadurch, daß die gesamte Vorrichtung aus Massivhartmetall besteht, ist sie auch relativ bruchanfällig und sehr spröde. Bei hohem Vorschub können außerdem Schwingungen auftreten. Ein weiterer Nachteil der bekannten Vorrichtungen zum Zerspanen von Holz oder holzartigen Werkstoffen ist, daß, wenn die gezahnte Oberfläche abgenützt worden ist, die gesamte Vorrichtung erneuert werden muß. Dadurch werden unnötig viel hochwertige Rohstoffe verschwendet.

Im Unterschied zu der gezahnten Oberfläche sollte der Grundkörper vor allem biegebruchsicher und nicht spröde sein. Aus diesem Grunde ist bei einem anderen Werkzeug vorgeschlagen worden, den Grundkörper entsprechend aus einem zäheren Material herzustellen, wobei der Grundkörper an ein oder an zwei Seiten abgeflacht ist. Auf diese Abflachungen sind dann einzelne Messerplättchen aufgesetzt. Die Messerplättchen besitzen Bohrungen und sind mit Schrauben in Gewindebohrungen des Grundkörpers eingeschraubt. Dies bedeutet, daß in diesem Falle lediglich die einzelnen Messerplättchen aus einem hochwertigen Hartmetall, HSS-Stahl oder einem anderen Schneidwerkstoff hergestellt sein mußten. Bei einem Verschleiß von einzelnen Messerplättchen konnten diese auf einfache und kostengünstige Weise ausgetauscht werden.

Nachteilig bei dieser Werkzeugart ist jedoch, daß der Grundkörper aufgrund der Materialschwächung nicht so hoch belastbar war. Insbesondere bei hohem Vorschub bestand die Gefahr von Schwingungen und daraus resultierenden Brüchen.

Der vorliegenden Erfindung liegt die Aufgabe zugrunde, eine Vorrichtung der eingangs erwähnten Art zu schaffen, die die Nachteile von Spanwerkzeugen vermeidet, die einen Grundkörper besitzen mit einzelnen darauf angeordneten Messern unter Beibehaltung deren Vorteile, und die in gleicher Weise die Nachteile beseitigt, die ein Spanwerkzeug besitzt, das vollständig aus einem hochwertigen Schneidwerkstoff besteht, insbesondere eine Vorrichtung zu schaffen, die hoch belastbar ist, einen geringeren Leistungsbedarf besitzt und eine hohe Lebensdauer.

Diese Aufgabe wird erfindungsgemäß dadurch gelöst, daß der Grundkörper im Querschnitt gesehen eine weitgehend geschlossene Rundform aufweist, in den eine Vielzahl von Umfangsbohrungen eingebracht ist, in die die Messer eingesetzt sind, welche durch Befestigungsglieder in den Umfangsbohrungen festgehalten sind.

Im Vergleich zu einem Werkzeug, das vollständig aus hochwertigem Stahl, Hartmetall o. dgl. besteht, ist die neue Vorrichtung zum Zerspanen von Holz oder holzartigen Stoffen oder von Leichtmetall billiger, da weniger teures hochwertiges Material verwendet werden muß. Der Grundkörper kann aus billigerem Material hergestellt sein, und nur die eigentlichen Messer sind z.B. aus HSS-Stahl, Hartmetall und aus sonstigen Schneidstoffen.

Der Grundkörper hingegen kann aus einem hochfesten, zähen Trägerwerkstoff, der entsprechend bruchsicher ist, hergestellt werden. Nur die einzelnen Messer müssen somit aus teuren, hochwertigen Schneidwerkstoffen bestehen.

Ein weiterer Vorteil ist die leichtere Austauschbarkeit von beschädigten Messern, ohne daß die ganze Einheit weggeworfen werden muß. Dadurch wird vermieden, daß unnötig viele Rohstoffe verbraucht werden.

Ein weiterer Vorteil resultiert aus der Form des Grundkörpers. Durch die Verwendung eines Grundkörpers, der im wesentlichen als gleichmäßiger Rundkörper ausgebildet ist, tritt keine Schwächung ein, wodurch dieser entsprechend hoch belastbar ist. Bisher übliche Werkzeuge, die abgefräste bzw. flache Umfangsabschnitte besitzen, auf denen Messer flach aufgesetzt und z.B. mit Schrauben auf dem Grundkörper befestigt sind, haben gegenüber der neuen Vorrichtung deutliche Nachteile, da bei ihnen der Kern des Grundkörpers geschwächt worden ist. Durch die neue Vorrichtung, die im wesentlichen als gleichmäßiger Rundkörper ausgebildet ist, wird eine wesentlich höhere Belastbarkeit und damit ein höherer Schnittdruck und/oder eine höhere Vorschubgeschwindigkeit erreicht. Dies bedeutet auch einen geringeren Leistungsbedarf und geringere Lagerbeanspruchung und damit auch eine höhere Lebensdauer.

Erfindungsgemäß ist ferner vorgesehen, daß die Umfangsbohrungen spiralförmig über die Länge des Grundkörpers verteilt angeordnet sind.

Der Vorteil besteht hier in einem guten und vor allem gleichmäßigen Eingriff während der Rotation des Werkzeuges.

In Weiterbildung der Erfindung kann vorgesehen sein, daß mehrere Spiralen nebeneinander über den Umfang verteilt auf dem Grundkörper angeordnet sind.

Durch diese Anordnung wird eine noch höhere Gleichmäßigkeit und bessere Schnittführung erreicht. Dadurch läßt sich auch bei höherem Vorschub ein guter und gleichmäßiger Eingriff durchführen.

In einer weiteren Ausbildung der Erfindung ist ferner vorgesehen, daß Befestigungsglieder als Befestigungsschrauben ausgebildet sind, die in neben den Umfangsbohrungen angeordneten Gewindebohrungen befestigt sind, und die die Messer in den Umfangsbohrungen durch Klemm- und/oder Formschluß festhalten.

Der Vorteil besteht hier in einer einfachen und schnellen Befestigungsart und in der einfachen Austauschbarkeit von einzelnen Messern. Dadurch, daß die Befestigungsglieder als Befestigungsschrauben ausgebildet sind, wurde eine relativ billige Befestigungsart gewählt, da die Schrauben als Massenprodukt sehr preisgünstig sind. Dadurch, daß die Befestigungsglieder mit einem einfachen Schraubenzieher zu öffnen sind, ist es kein Problem, diese zu öffnen, um die Messer auszutauschen. Nach dem öffnen der Befestigungsglieder werden lediglich die neuen Messer eingesetzt und danach die Befestigungsschrauben wieder angezogen.

Erfindungsgemäß ist ferner vorgesehen, daß die Umfangsbohrungen für die Messer wenigstens annähernd radial verlaufen.

Dadurch wird eine Anordnung erreicht, die sich in der Praxis als vorteilhaft erwiesen hat.

Von Vorteil ist es, wenn die Unterseite des Schraubenkopfes auf einem Ansatz eines Messers aufliegt.

Dadurch wird eine einfache und sichere Befestigung der Messer erzielt.

In einer vorteilhaften Weiterbildung der Erfindung kann vorgesehen sein, daß das Messer ein zylindrisches Basisteil und eine Schneidspitze aufweist, wobei in dem Basisteil eine Ausfräsung als Auflage für den Schraubenkopf eingebracht ist.

Der Vorteil besteht hier in einer einfachen und sicheren Ausgestaltung der Befestigung der Messer. Durch diese Ausfräsung im Basisteil wird eine einfache Verbindung zwischen Grundkörper und Messer mit Hilfe der Befestigungsglieder hergestellt.

In einer vorteilhaften und nicht naheliegenden Weiterbildung der Erfindung kann ferner vorgesehen sein, daß die Ausfräsung wenigstens annähernd teilbogenförmig in das Basisteil eingebracht ist.

Der Vorteil dieser nicht naheliegenden Weiterbildung der Erfindung besteht darin, daß das Messer stets richtig positioniert ist. Dies resultiert daraus, daß neben einem Klemmschluß zwischen dem Messer und der Befestigungsschraube rechtzeitig auch ein Formschluß erreicht wird, wenn der bogenförmige Teil bezüglich seinem Radius wenigstens annähernd dem Radius des Schraubenkopfes entspricht. Der bogenförmige Teil stellt gleichzeitig nämlich zusätzlich noch eine Verdrehsicherung dar, durch welche sichergestellt ist, daß die Schneidspitze stets richtig positioniert ist.

Die Befestigungsschraube läßt sich also nur in den Grundkörper hineindrehen, wenn das Messer mit seiner bogenförmigen Aussparung richtig liegt. Falls dem nicht so ist, verkantet das Messer mit der Schraube, und diese läßt sich nicht in den Grundkörper drehen. Wenn die Schraube dann richtig in den Grundkörper eingedreht worden ist, verhindern die beiden zusammenwirkenden bogenförmigen Teilstücke der Schraube und des Messers ein Verstellen. Durch diese Anordnung wird sowohl ein falscher Einbau des Messers als auch ein späteres Verdrehen beim Zerspanen von Holz oder einem holzartigen Werkstoff selbst bei höherem Vorschub verhindert.

Erfindungsgemäß ist ferner vorgesehen, daß die Schneidspitze jedes Messers in Drehrichtung gegenüber der Mittelachse des Grundkörpers zurückgesetzt ist.

Der Vorteil liegt darin, daß durch diesen Rückversatz bzw. die außermittige Anordnung der Schneidspitze auf einfache Weise ein Spanwinkel erreicht wird.

Der Rückversatz der Schneidspitze kann zwischen 0,5 und 1,2 mm, vorzugsweise 0,8 mm, betragen.

Dies sind Werte, die sich in der Praxis als besonders gute Werte herausgestellt haben.

In einer konstruktiven Ausgestaltung der Erfindung kann ferner vorgesehen sein, daß die Befestigungsschraube mit einem Sechskantkopf versehen ist.

Durch diese Anordnung wird ein einfaches und nicht störendes Einschrauben und Wiederherausschrauben erreicht. Dadurch, daß die Schraube mit einem Innensechskantkopf versehen ist, wird gewährleistet, daß diese beim Einschrauben bzw. beim Wiederherausschrauben kaum beschädigt wird, da die Kraft gleichmäßig angesetzt werden kann.

In einer anderen Ausbildung der Erfindung kann vorgesehen sein, daß die Befestigungsschraube als Torx-Schraube ausgebildet ist.

Diese Lösung stellt eine Alternative zu der erwähnten Befestigungsschraube mit einem Innensechskantkopf dar.

Außerdem kann vorgesehen sein, daß die Tiefe jeder Umfangsbohrung zwischen der Hälfte und zwei Drittel der Höhe des darin eingesetzten Messers beträgt.

Diese Werte haben sich in der Praxis als sehr gut geeignet herausgestellt.

Eine weitere vorteilhafte Ausgestaltung der Erfindung kann darin bestehen, daß das Basisteil eines jeden Messers, anstelle der Ausfräsung als Auflagefläche für die Befestigungsschraube, eine in Richtung zur Schneidspitze sich verjüngende Kegelschräge aufweist.

In der Praxis hat sich für eine gute Klemmung der Messer in den Umfangsbohrungen ein Winkel α von 15° zur Senkrechten als Schräge erwiesen.

In einer Weiterbildung der Erfindung kann vorgesehen sein, daß der Grundkörper mit einer Einbohrschneide versehen ist.

Diese Einbohrschneide ermöglicht ein leichtes Eindringen beim Bohren in das Material.

Nachfolgend ist anhand der Zeichnung ein Ausführungsbeispiel der Erfindung prinzipmäßig dargestellt.

Es zeigt:

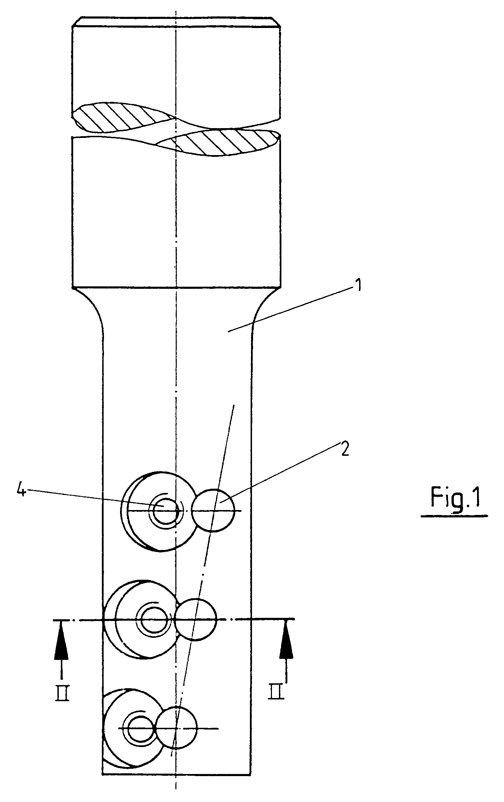

- Fig. 1: Seitenansicht der erfindungsgemäßen Vorrichtung;
- Fig. 2: Draufsicht auf die erfindungsgemäße Vorrichtung (teilweise im Schnitt) nach der Linie II-II der Fig. 1;
- Fig. 3: Seitenansicht eines Messers;
- Fig. 4: Frontansicht eines Messers nach Fig. 3;
- Fig. 5: Schnitt durch das Messer nach der Linie V-V der Fig. 3 mit einer gestrichelten Darstellung des Befestigungsgliedes.
- Fig. 6: Seitenansicht eines Messers mit Kegelschräge;
- Fig. 7: Schnitt durch das Messer nach der Linie VI-VI der Fig. 6;
- Fig. 8: Draufsicht auf die erfindungsgemäße Vorrichtung mit einem Messer der Fig. 6.

Die Vorrichtung besteht aus einem Grundkörper 1, der eine weitgehend geschlossene Rundform aufweist. Der Grundkörper 1 kann aus einem Material bestehen, das biegebruchsicher und nicht spröde ist. In diesem Grundkörper 1 befinden sich spiralförmig angeordnete Umfangsbohrungen 2. Die Tiefe der Umfangsbohrungen 2 kann zwischen der Hälfte und zwei Drittel der Höhe der darin eingesetzten Messer betragen. In die Umfangsbohrungen 2 werden Messer 3 eingesetzt. Die Messer 3 können aus einem gehärteten und widerstandsfähigen Material bestehen. In dem Grundkörper 1 sind ebenfalls spiralförmig angeordnete Gewindebohrungen 4, die sich neben den Umfangsbohrungen 2 befinden, angebracht. In diese Gewindebohrungen 4 lassen sich Befestigungsschrauben 5 einsetzen. In dem Grundkörper 1 können sich beispielsweise drei spiralförmige Reihen mit je drei oder mehr dazugehörigen Umfangsbohrungen 2 und drei oder mehr dazugehörigen Gewindebohrungen 4 befinden.

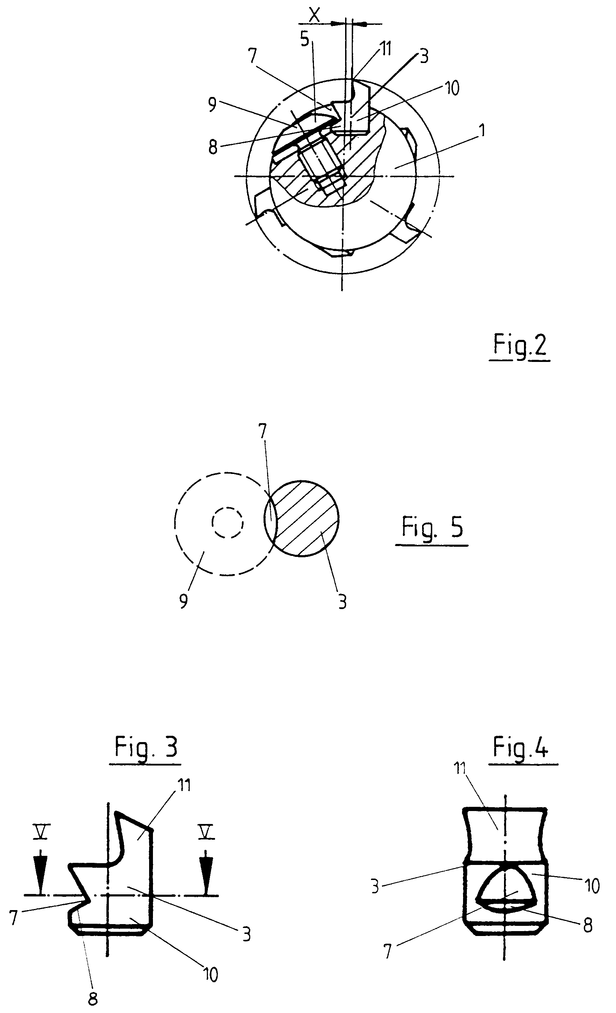

Wie in Fig. 2 ersichtlich, befindet sich in jeder Umfangswand eines Messers 3 eine Ausfräsung 7, durch die eine Auflagefläche 8 entsteht. Wenn nun die Befestigungsschraube 5 in den Grundkörper 1 gedreht wird, dann preßt ihr Schraubenkopf 9 mit seiner Unterseite auf die flache Auflagefläche 8 des Messers 3. Dadurch wird das Messer im Grundkörper gehalten, wobei es auf den Boden der Umfangsbohrung 2 gedrückt wird. Die Ausfräsung 7 ist aus dem ansonsten zylindrischen Basisteil 10 des Messers 3 herausgefräst oder auf sonstige Weise eingebracht. Die Befestigungsschraube 5 verschwindet nach dem Eindrehen vollständig im Grundkörper 1, da sie als Stufenbohrung ausgebildet ist, wobei der Schraubenkopf 9 vollständig in der größeren Stufe liegt.

Die Befestigungsschraube 5 ist annähernd auf das Zentrum des Grundkörpers 1 ausgerichtet. Wie aus Fig. 2 ebenfalls ersichtlich ist, fügt sich der Schraubenkopf 9, der beispielsweise mit einem Innensechtskant versehen ist, harmonisch in die Rundform des Grundkörpers 1 ein.

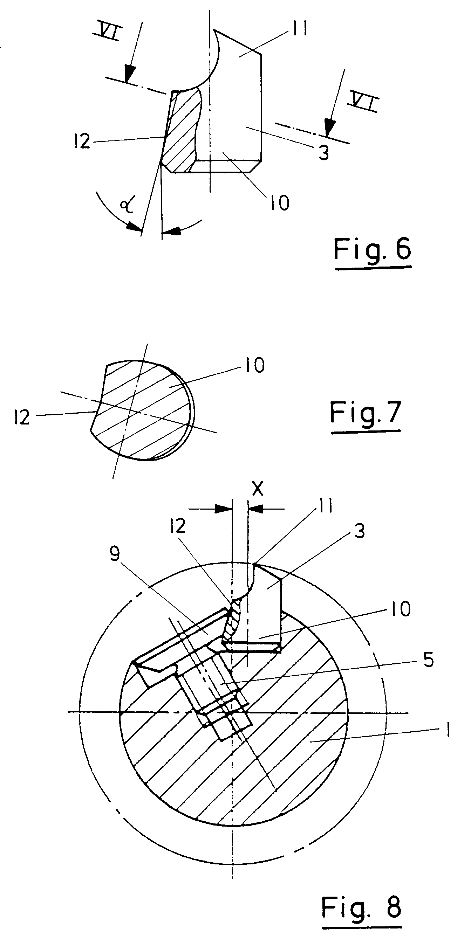

Aus Fig. 3 ist deutlich die Ausfräsung 7, die die Auflagefläche 8 bildet, erkennbar. Auf dem zylindrischen Basisteil 10 befindet sich die Schneidspitze 11. Die Schneidspitze 11 jedes Messers ist so angebracht, daß sie in Drehrichtung gegenüber der Mittelachse des Grundkörpers zurückversetzt ist. Der Rückversatz gegen die Drehrichtung kann beispielsweise zwischen 0,5 und 1,2 mm, vorzugsweise 0,8 mm, betragen (siehe Fig. 2 und Fig. 8 mit dem Versatz "x").

Aus Fig. 4 und Fig. 5 ist ersichtlich, daß die Ausfräsung 7 wenigstens annähernd teilbogenförmig in das Basisteil 10 eingebracht ist. Dadurch, daß die Ausfräsung 7 teilbogenförmig ist, paßt sie optimal mit dem ebenfalls bogenförmigen Schraubenkopf 9 zusammen (siehe Fig. 5). Durch die Bogenform des Schraubenkopfes 9 und die teilbogenförmige Ausfräsung 7 im Basisteil 10 kann sich das Messer 3 auch bei starker Belastung, d. h. bei starkem Vorschub, nicht drehen. Dadurch ist ein schnelles und gleichzeitig präzises Zerspanen von Holz, holzartigen Werkstoffen oder von Leichtmetall möglich. Durch die Ausfräsung 7 wird ausserdem gewährleistet, daß das Messer 3 nicht verkehrt herum montiert werden kann, da es nur in einer Lage mit dem Schraubenkopf 9 bezüglich der Bogenform harmoniert.

Wie in Fig. 6 ersichtlich, kann auch in jeder Umfangswand eines Messers 3 bzw. im Basisteil 10, anstelle der Ausfräsung 7 und der Auflagefläche 8 eine sich in Richtung der Schneidspitze 11 verjüngende Kegelschräge 12 vorhanden sein.

Die Kegelschräge 12 ist dadurch (wie in Fig. 8 ersichtlich) der Schräge der Unterseite des Schraubenkopfes 9 der Befestigungsschraube 5, wenn diese als Senkschraube ausgebildet ist, angepaßt.

Beim Hineindrehen der Befestigungsschraube 5 in den Grundkörper 1 wird dadurch der Schraubenkopf 9 formschlüssig an die Kegelschräge 12 gedrückt und das Messer 3 somit sehr sicher in der Umfangsbohrung festgeklemmt.

Die Kegelschräge 12 kann beispielsweise in einem Winkel α = 15° zur Senkrechten ausgeführt sein.

Aus Fig. 7 ist erkennbar, wie die Kegelschräge 12 kreissegmentartig in das Basisteil 10 des Messers 3 eingearbeitet ist, so daß auch bei dieser Variante sich der Schraubenkopf 9 harmonisch in den Grundkörper 1 einfügen kann.

Anwendungsgebiete bzw. Einsatzgebiete für das erfindungsgemäße Spanwerkzeug sind Grobzerspanen von Holz und holzartigen Werkstoffen. Mit der erfindungsgemäßen Vorrichtung lassen sich außerdem z. B. Preßspanplatten, Massivholz, Schichtstoffe und Leichtmetalle, wie z. B. Aluminium, zerspanen.

## Patentansprüche

1. Vorrichtung zum Zerspanen von Holz, holzartigen Werkstoffen oder von Leichtmetall, mit einem Grundkörper und in den Grundkörper eingesetzten Messern,
**dadurch gekennzeichnet,** daß der Grundkörper (1) eine weitgehend im Querschnitt gesehene geschlossene Rundform aufweist, in den eine Vielzahl von Umfangsbohrungen (2) eingebracht ist, in die die Messer (3) eingesetzt sind, welche durch Befestigungsglieder (5) in den Umfangsbohrungen (2) festgehalten sind.

2. Vorrichtung nach Anspruch 1,
**dadurch gekennzeichnet,** daß die Umfangsbohrungen (2) spiralförmig über die Länge des Grundkörpers (1) verteilt angeordnet sind.

3. Vorrichtung nach Anspruch 2,
**dadurch gekennzeichnet,** daß mehrere Spiralen nebeneinander über den Umfang verteilt auf dem Grundkörper (1) angeordnet sind.

4. Vorrichtung nach einem der Ansprüche 1 bis 3,
**dadurch gekennzeichnet,** daß Befestigungsglieder als Befestigungsschrauben (5) ausgebildet sind, die in neben den Umfangsbohrungen (2) angeordneten Gewindebohrungen (4) befestigt sind, und die die Messer (3) in den Umfangsbohrungen (2) durch Klemm- und/oder Formschluß festhalten.

5. Vorrichtung nach einem der Ansprüche 1 bis 4,
**dadurch gekennzeichnet,** daß die Umfangsbohrungen (2) für die Messer (3) wenigstens annähernd radial verlaufen.

6. Vorrichtung nach Anspruch 4,
**dadurch gekennzeichnet,** daß die Unterseite des Schraubenkopfes (9) auf einer Auflagefläche (8) eines Messers (3) aufliegt.

7. Vorrichtung nach Anspruch 6,
**dadurch gekennzeichnet,** daß das Messer (3) ein zylindrisches Basisteil (10) und eine Schneidspitze (11) aufweist, wobei in dem Basisteil (10) eine Ausfräsung (7) als Auflagefläche (8) für den Schraubenkopf (9) eingebracht ist.

8. Vorrichtung nach Anspruch 7,
**dadurch gekennzeichnet,** daß die Ausfräsung (7) wenigstens annähernd teilbogenförmig in das Basisteil (10) eingebracht ist.

9. Vorrichtung nach einem der Ansprüche 1 bis 8,
**dadurch gekennzeichnet,** daß die Schneidspitze (11) jedes Messers in Drehrichtung gegenüber der Mittelachse des Grundkörpers zurückgesetzt ist.

10. Vorrichtung nach Anspruch 4,
**dadurch gekennzeichnet,** daß das Basisteil (10) eine in Richtung der Schneidspitze (11) sich verjüngende Kegelschräge (12) aufweist.

11. Vorrichtung nach Anspruch 10,
**dadurch gekennzeichnet,** daß die Kegelschräge (12) in einem Winkel α von 15° in das Basisteil (10) eingearbeitet ist.

12. Vorrichtung nach einem der Ansprüche 1 bis 11,
**dadurch gekennzeichnet,** daß der Grundkörper (1) mit einer Einbohrschneide versehen ist.
